# EUROPEAN PATENT SPECIFICATION

(11) **EP 3 314 166 B1**
(45) Date of publication and mention of the grant of the patent: **06.11.2019**
(21) Application number: 16733357.4
(22) Date of filing: 20.06.2016
(51) Int. Cl.: F23C 6/04, F23C 9/08, F23N 5/00, F23R 3/34

(54) **METHOD AND EQUIPMENT FOR COMBUSTION OF AMMONIA**
VERFAHREN UND VORRICHTUNG ZUR VERBRENNUNG VON AMMONIAK
PROCÉDÉ ET ÉQUIPEMENT POUR LA COMBUSTION D'AMMONIAC

(30) Priority: 23.06.2015 GB 201510999
(43) Date of publication of application: 02.05.2018
(73) Proprietor: Siemens Aktiengesellschaft, 80333 München (DE)
(72) Inventor: BULAT, Ghenadie, Lincoln LN6 8BD (GB); HUGHES, Timothy, Wantage OX12 7AU (GB); MAY, Jonathan, North Hykeham Lincoln LN6 9HL (GB); WILKINSON, Ian, Long Hanborough Witney OX29 8JR (GB)
(74) Representative: Maier, Daniel Oliver
(86) International application number: PCT/EP2016/064222
(87) International publication number: WO 2016/207117

(56) References cited:
- JP-A- 2012 255 420
- JP-A- 2015 031 215
- US-A- 5 823 760
- A. VALERA-MEDINA ET AL: "Ammonia, Methane and Hydrogen for Gas Turbines", ENERGY PROCEDIA, vol. 75, no. 75, 31 March 2015 (2015-03-31), pages 118-123, XP055302626, NL ISSN: 1876-6102, DOI: 10.1016/j.egypro.2015.07.205

## Description

Ammonia may be used as an energy storage material. Ammonia may be synthesised and stored for later combustion. Combustion of ammonia in a gas turbine may allow chemically-stored energy to be released into mechanical energy.

However, combustion of ammonia produces nitrogen oxides NOₓ which should be removed from the exhaust gas in order to reach emission targets. Document JP2015-31215 A discloses the preamble of independent claims 1 and 7.

The present invention accordingly provides apparatus and methods as set out in the appended claims. Such apparatus and methods reduce or eliminate the emission of nitrogen oxides NOₓ during ammonia combustion.

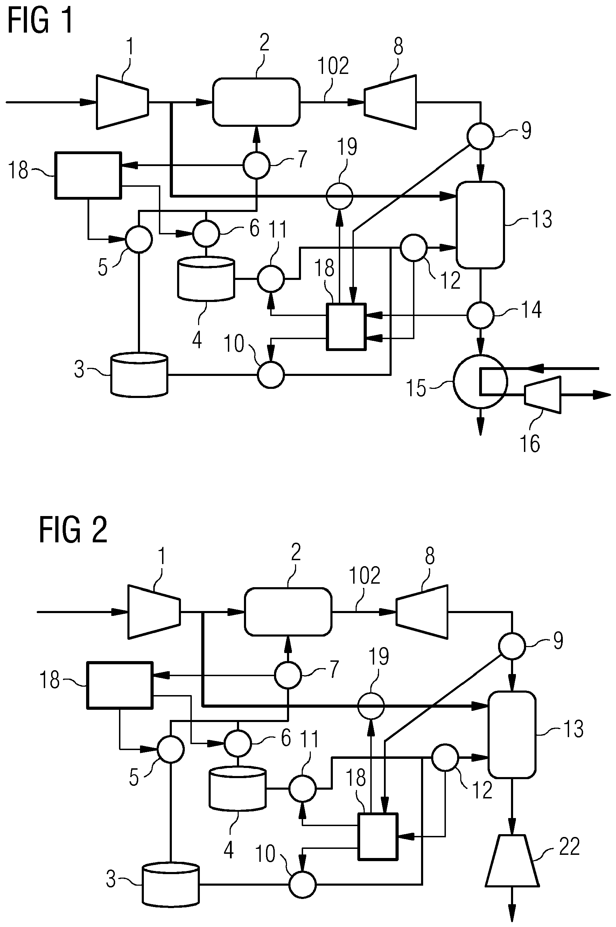

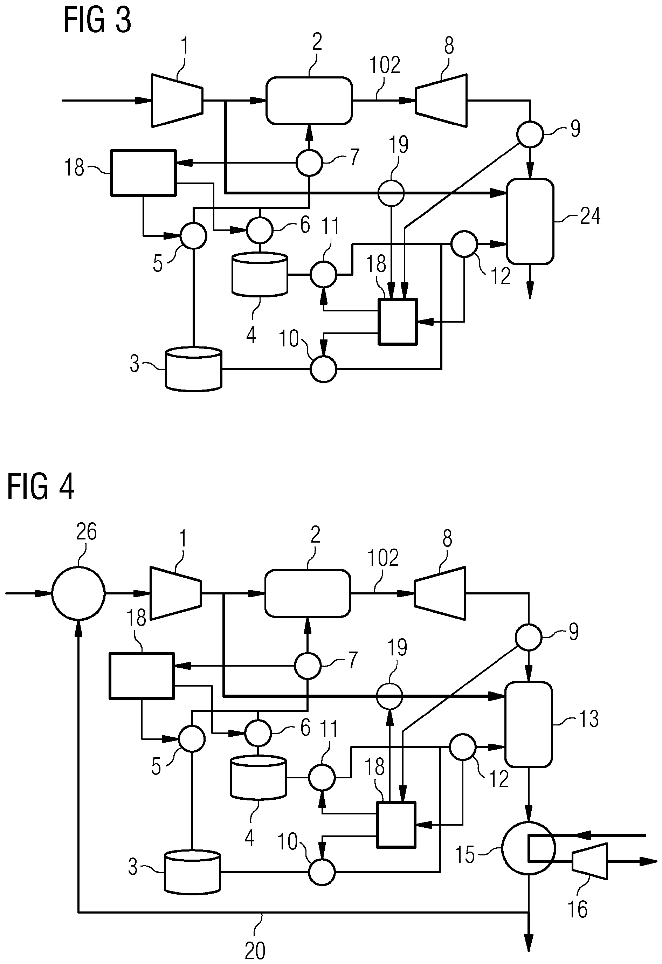

The above, and further, objects, characteristics and advantages of the present invention will become more apparent from the following description of certain embodiments thereof, given by way of non-limiting examples only, in conjunction with the appended drawings, wherein: Figs. 1-3 schematically illustrate respective examples which do not form part of the invention. Fig. 4 illustrates the present invention.

In a certain example, illustrated in Fig. 1, an ammonia combustion includes a compressor 1 which compresses air, or other oxygen-containing gas, and passes it into a relatively high-pressure and high-temperature first combustion chamber 2. A first mixture of ammonia 3 and hydrogen 4 are added to the first combustion chamber 2 where combustion takes place producing heat and an exhaust gas flow. For example, the operational pressure within the first combustion chamber 2 may lie in the range 10-30 bar, with a typical operational pressure being in the range 12-25 bar.

The exit temperature of exhause gases 102 from the first combustion chamber may be in the range 1400-2100 K, typically 1500-1800 K.

Control of the ratio of ammonia to hydrogen supplied to the first combustion chamber 2 is achieved by a controller 18 through mass flow controllers 5 and 6 coupled with an *in situ* gas analysis sensor 7. The gas mixture is optimized to deliver maximum power upon combustion. However, due to high combustion temperatures, and the high nitrogen content of the ammonia fuel, the exhaust gas flow 102 from the combustion chamber 2 will have high levels of nitrogen oxides NOₓ.

The exhaust gas 102 is provided to a first turbine 8 where work is transferred to a shaft or similar to provide a mechanical output. Exhaust gas leaving the first turbine 8 is hot and is routed to a second combustion chamber 13 operating in a relatively low pressure and relatively low temperature regime. For example, the operational pressure within the second combustion chamber 13 may lie in the range 1-10 bar, with a typical operational pressure being in the range 1-5 bar. The exit temperature of exhause gases from the second combustion chamber may be in the range 300-1300 K, typically 750-880 K.

Prior to entering this second combustion chamber, the exhaust gas containing nitrogen oxides NOₓ is measured with an *in situ* gas analysis sensor 9.

A second mixture of ammonia 3, hydrogen 4 and air is injected into the second combustion chamber 13 with an enhanced equivalence ratio, typically 1.0 - 1.2, that is, an excess of ammonia over that required to react with the supplied hydrogen to produce only N₂ and H₂O. The mixture is combusted. The enhanced ratio ensures that the combustion produces significant proportion of NH₂⁻ ions which combine with the nitrogen oxides NOₓ to produce N₂ and H₂O thereby removing the NOₓ from the exhaust stream 102.

The exact equivalence ratio of ammonia to hydrogen in the second mixture is set by controller 18 using mass flow controllers 10, 11 and optionally an air mass flow controller 19 in conjunction with the *in situ* gas analysis sensor 12 to control the ammonia to hydrogen ratio, and optionally also the proportion of oxygen-containing gas such as air, in the second gas mixture supplied to the second combustion chamber 13. The required equivalence ratio is determined by measurement of the input NOₓ proportion by gas sensor 9 and by measurement of the output NOₓ emissions measured by *in situ* gas sensor 14. Controller 18 receives data from sensors 12, 9, 14 and issues appropriate commands to mass flow devices 11, 12 and optionally 19. Controller 18 may be the same controller as the controller associated with sensor 7 and mass flow devices 5, 6, or may be a separate controller.

A heat exchanger 15 may be used to remove waste heat and recover energy from discharge gases from the second combustion chamber. In the illustrated example, this is achieved by recovering heat in heat exchanger 15 and using this to drive steam turbine 16, although other mechanisms may be provided to recover energy from the waste heat, as appropriate.

For example, as illustrated in Fig. 2, discharge gases from the second combustion chamber 13 may be routed to a second turbine 22 to recover waste energy as mechanical rotation.

Fig. 3 shows another example. In this example, second combustion chamber 24 has an integrated heat exchanger. This may be similar to a heat recovery steam generator with supplementary firing.

A heat recovery steam generator (HRSG) is a heat exchanger designed to recover the exhaust 'waste' heat from power generation plant prime movers, such as gas turbines or large reciprocating engines, thus improving overall energy efficiencies. Supplementary (or 'duct') firing uses hot gas turbine exhaust gases as the oxygen source, to provide additional energy to generate more steam if and when required. It is an economically attractive way of increasing system output and flexibility. Supplementary firing can provide extra electrical output at lower capital cost and is suitable for peaking. A burner is usually, but not always, located in the exhaust gas stream leading to the HRSG. Extra oxygen (or air) can be added if necessary. At high ambient temperatures, a small duct burner can supplement gas turbine exhaust energy to maintain the designed throttle flow to the steam turbine.

According to the present invention, illustrated in Fig. 4, a recirculation line 20 may be provided to recirculate a portion of the discharge gas from the second combustion chamber 13 back into the first combustion chamber 2. The recirculated discharge gas may be combined with the input gas flow, for example by mixing with intake oxygen-containing gas at mixer 26. This has the advantage that unburnt NH₃ in the exhaust gas is recycled and combusted. The proportion may be varied, for example between 0% and 80%, depending on the proportion of unburnt NH₃ in the exhaust gas from the second combustion chamber, and the acceptable proportion of NH₃ in discharge gases from the system.

The present invention accordingly aims to provide one or more of the following advantages:
(1)- nitrogen oxides NOₓ content is reduced or eliminated from the discharge gases;
(2)- overall efficiency of the system is maximised as all ammonia and hydrogen is converted to energy, nitrogen and water;
(3)- the first and second combustion chambers 2, 13, 24 can be located at a different location to the turbine(s) 8, 16, 22 so enabling various possible layouts to suit environmental constraints;
(4)- NH₃ content in the discharge gas is minimised.

The respective technical features that may contribute to the above advantages are as follows.
(1) Use of a second combustion chamber 13, 24 enables combustion under appropriate equivalence ratios to allow the formation of NH₂⁻ ions. The subsequent combination with NOₓ in the discharge gas to form N₂ and H₂O reduces the ammonia content of the discharge gas.
(2) Measurement 9 of the NOₓ content in the exhaust gas 102 from turbine 8 prior to input into the second combustion chamber, control of the NH₃/H₂ gas mass flows into the first combustion chamber and measurement 14 of the NOₓ emissions at the output of the second chamber allow the exact setting of the equivalence ratio according to the NOₓ content of the exhaust gas and discharge gas. This is necessary because the burn conditions in the first combustion chamber will determine the NOₓ content of the exhaust gases 102. These conditions can change on a dynamic basis and from system to system.
(3) Use of a heat exchanger 15, 24 to minimize the energy loss associated with the second combustion in the second combustion chamber 13, 24.
(4) Recirculation of discharge gas from the second combusion chamber back to the first combustion chamber acts to minimize NH₃ emissions.

The present invention accordingly provides methods and systems for combustion of ammonia, as defined in the appended claims.

Energy from the combustion in the first combustion chamber 2 may be recovered by operation of a first turbine 8 to convert the energy released by combustion in the first combustion chamber into mechanical energy.

Energy from the combustion in the second combustion chamber 13 may be recovered by operation of a second turbine 16, 22 to convert the energy released by combustion in the second combustion chamber into mechanical energy. Operation of the second turbine 22 may be by direct action of exhaust gases from the second combustion chamber 13 on the turbine 22, or by heating of water in a heat exchanger 15 to drive second turbine 16 by steam.

The second combustion chamber 24 may incorporate a heat exhanger for recovery of heat from exhaust gases from the second combustion chamber. The heat exchanger may serve to heat steam for the recovery of heat.

A proportion of discharge gases from the second combustion chamber may be recirculated into the first combustion chamber in order to provide combustion to ammonia remaining in the exhaust gases.

While the present application has been described with reference to a limited number of particular embodiments, numerous modifications and variants will be apparent to those skilled in the art.

## Claims

1. A method for the combustion of ammonia, wherein a first combusion chamber (2) receives ammonia and hydrogen in controlled proportions, and an oxygen-containing gas, wherein combustion of the ammonia and hydrogen produces nitrogen oxides among other combustion products, and wherein a second combustion chamber (13) receives the nitrogen oxides along with further ammonia and hydrogen in further controlled proportions along with further oxygen-containing gas, such that the nitrogen oxides are combusted into nitrogen and water,
**characterised in that** the method further comprises:
- measuring the nitrogen oxide content of the combustion products of the first combustion chamber with a gas sensor (9) and the output of the NOx emissions of the second combustion chamber with an in situ gas sensor (14), and
- controlling the proportions of ammonia and hydrogen and oxygen-containing gas in accordance with the measured nitrogen oxide content of the combustion products of the first combustion chamber and the second combustion chamber by a controller (18) using mass flow controller (10,11) for ammonia and hydrogen, such that the ammonia and hydrogen and oxygen-containing gas is injected into the second combustion chamber (13) with an enhanced equivalence ratio, providing an excess of ammonia over that required to react with the supplied hydrogen to produce only nitrogen and water,
wherein a proportion of discharge gases from the second combustion chamber are recirculated into the first combustion chamber in order to provide combustion to ammonia remaining in the discharge gases.

2. A method for the combustion of ammonia according to claim 1 wherein energy from the combustion in the first combustion chamber (2) is recovered by operation of a first turbine (8) to convert energy released by combustion in the first combustion chamber into mechanical energy.

3. A method for the combustion of ammonia according to claim 1 wherein energy from the combustion in the second combustion chamber (13) is recovered by operation of a second turbine (16, 22) to convert the energy released by combustion in the second combustion chamber into mechanical energy.

4. A method for the combustion of ammonia according to claim 3 wherein operation of the second turbine (22) is by direct action of exhaust gases from the second combustion chamber (13) on the turbine (22).

5. A method for the combustion of ammonia according to claim 3 wherein operation of the second turbine (22) is by heating of water in a heat exchanger (15) to drive second turbine (16) by steam.

6. A method for the combustion of ammonia according to claim 1 or claim 2 wherein heat is recovered from the second combustion chamber (24) by an integrated heat exchanger.

7. A system configured to combust ammonia, comprising a first combusion chamber (2) connected to receive ammonia (3) and hydrogen (4) in controlled proportions, and an oxygen-containing gas, and a second combustion chamber (13) connected to receive exhaust gases (102) from the first combustion chamber along with further ammonia and hydrogen in further controlled proportions along with further oxygen-containing gas,
**characterised in that** the system further comprises:
- a gas analysis sensor (9) to measure the nitrogen oxide content of the combustion products of the first combustion chamber,
- an *in situ* gas sensor (14) to measure the output nitrogen oxide,
- a controller (18) and mass flow controllers (10, 11) for ammonia and hydrogen,
wherein the controller (18) receives measurements from gas analysis sensor (9) indicating the proportion of nitrogen oxide of the combustion products of the first combustion chamber and from the in situ gas sensor (14) and accordingly controls the mass flow controllers (10, 11), so as to control the proportions of ammonia and hydrogen and oxygen-containing gas in accordance with the measured nitrogen oxide content of the combustion products of the first combustion chamber, such that ammonia and hydrogen and oxygen-containing gas is injected into the second combustion chamber (13) with an enhanced equivalence ratio, providing an excess of ammonia over that required to react with the supplied hydrogen to produce only nitrogen and water,the required equivalence ratio being determined by measurement of the input nitrogen oxide proportion by gas sensor (9) and by measurement of the output nitrogen oxide emissions measured by the *in situ* gas sensor (14),
wherein the system further comprises a recirculation line (20) arranged to recirculate a portion of the discharge gas from the second combustion chamber (13) back into the first recirculation chamber (2).

8. A system for the combustion of ammonia according to claim 7 wherein the recirculation line is connected to a mixer (26) to mix the proportion of recirculated discharge gas with intake oxygen-containing gas.

9. A system according to claim 7 or claim 8, further comprising a first turbine (8) connected to receive exhaust gases (102) from the first combustion chamber, to generate a mechanical output and to provide the exhaust gases to the second combustion chamber (13).

10. A system according to any of claims 7 to 9 further comprising a second turbine (22) connected to receive discharge gases from the second combustion chamber.

11. A system for the combustion of ammonia according to claim 10 wherein operation of the second turbine (22) is by direct action of exhaust gases from the second combustion chamber (13) on the turbine (22).

12. A system according to any of claims 7 to 9 further comprising a heat exchanger (15) connected to receive discharge gases from the second combustion chamber, whereby to heat water and generate steam to drive a second turbine (16) .

13. A system according to claim 12 wherein the heat exchanger is integrated into the second combustion chamber.

## Patentansprüche

1. Verfahren zum Verbrennen von Ammoniak, wobei eine erste Brennkammer (2) Ammoniak und Wasserstoff in geregelten Anteilen und ein sauerstoffhaltiges Gas aufnimmt, wobei das Verbrennen des Ammoniaks und des Wasserstoffs neben anderen Verbrennungsprodukten Stickstoffoxide produziert, und wobei eine zweite Brennkammer (13) die Stickstoffoxide zusammen mit weiterem Ammoniak und Wasserstoff in geregelten Anteilen zusammen mit weiterem sauerstoffhaltigem Gas derart aufnimmt, dass die Stickstoffoxide zu Stickstoff und Wasser verbrannt werden,
**dadurch gekennzeichnet, dass** das Verfahren ferner Folgendes umfasst:
Messen des Stickstoffoxidgehalts der Verbrennungsprodukte der ersten Brennkammer mit einem Gassensor (9) und des Ausstoßes der NOx-Emission der zweiten Brennkammer mit einem vor Ort befindlichen Gassensor (14) und
Regeln der Anteile von Ammoniak und Wasserstoff und sauerstoffhaltigem Gas gemäß dem gemessenen Stickstoffoxidgehalt der Verbrennungsprodukte der ersten Brennkammer und der zweiten Brennkammer durch eine Regelung (18) mit Hilfe einer Massenstromregelung (10, 11) für Ammoniak und Wasserstoff derart, dass das Ammoniak und der Wasserstoff und das sauerstoffhaltige Gas mit einem erhöhten Äquivalenzverhältnis in die zweite Brennkammer (13) eingespeist werden, das einen Überschuss von Ammoniak gegenüber dem bereitstellt, das für die Reaktion mit dem zugeführten Wasserstoff benötigt wird, um lediglich Stickstoff und Wasser zu produzieren,
wobei ein Anteil von aus der zweiten Brennkammer abgelassenen Gasen in die erste Brennkammer rückgeführt wird, um eine Verbrennung von in den Ablassgasen verbleibendem Ammoniak bereitzustellen.

2. Verfahren zum Verbrennen von Ammoniak nach Anspruch 1, wobei Energie aus der Verbrennung in der ersten Brennkammer (2) durch den Betrieb einer ersten Turbine (8) zurückgewonnen wird, um Energie, die durch die Verbrennung in der ersten Brennkammer freigesetzt wird, in mechanische Energie umzuwandeln.

3. Verfahren zum Verbrennen von Ammoniak nach Anspruch 1, wobei Energie aus der Verbrennung in der zweiten Brennkammer (13) durch den Betrieb einer zweiten Turbine (16, 22) zurückgewonnen wird, um Energie, die durch die Verbrennung in der zweiten Brennkammer freigesetzt wird, in mechanische Energie umzuwandeln.

4. Verfahren zum Verbrennen von Ammoniak nach Anspruch 3, wobei der Betrieb der zweiten Turbine (22) durch direkte Wirkung von Abgasen aus der zweiten Brennkammer (13) auf die Turbine (22) erfolgt.

5. Verfahren zum Verbrennen von Ammoniak nach Anspruch 3, wobei der Betrieb der zweiten Turbine (22) durch Erwärmen von Wasser in einem Wärmetauscher (15) erfolgt, um die zweite Turbine (16) mit Dampf anzutreiben.

6. Verfahren zum Verbrennen von Ammoniak nach Anspruch 1 oder Anspruch 2, wobei Wärme aus der zweiten Brennkammer (24) durch einen integrierten Wärmetauscher zurückgewonnen wird.

7. System, dafür gestaltet, Ammoniak zu verbrennen, umfassend eine erste Brennkammer (2), die dafür angeschlossen ist, Ammoniak (3) und Wasserstoff (4) in geregelten Anteilen und ein sauerstoffhaltiges Gas aufzunehmen, und eine zweite Brennkammer (13), die dafür angeschlossen ist, Abgase (102) aus der ersten Brennkammer zusammen mit weiterem Ammoniak und Wasserstoff in weiteren geregelten Anteilen zusammen mit weiterem sauerstoffhaltigem Gas aufzunehmen,
**dadurch gekennzeichnet, dass** das System ferner Folgendes umfasst:
einen Gasanalysesensor (9) zum Messen des Stickstoffoxidgehalts in den Verbrennungsprodukten der ersten Brennkammer
einen vor Ort befindlichen Gassensor (14) zum Messen des ausgestoßenen Stickstoffoxids,
eine Regelung (18) und Massenstromregelungen (10, 11) für Ammoniak und Wasserstoff, wobei die Regelung (18) Messwerte von dem Gasanalysesensor (9), welche den Anteil von Stickstoffoxid in den Verbrennungsprodukten der ersten Brennkammer anzeigen, und von dem vor Ort befindlichen Gassensor (14) aufnimmt und die Massenstromregelungen (10, 11) dementsprechend derart regelt, dass die Anteile an Ammoniak und Wasserstoff und sauerstoffhaltigem Gas gemäß dem gemessenen Stickstoffoxidgehalt der Verbrennungsprodukte der ersten Brennkammer derart geregelt werden, dass Ammoniak und Wasserstoff und sauerstoffhaltiges Gas mit einem erhöhten Äquivalenzverhältnis in die zweite Brennkammer (13) eingespeist werden, das einen Überschuss von Ammoniak gegenüber dem bereitstellt, das für die Reaktion mit dem zugeführten Wasserstoff benötigt wird, um lediglich Stickstoff und Wasser zu produzieren, wobei das benötigte Äquivalenzverhältnis durch Messen des eingegebenen Stickstoffoxidanteils durch den Gassensor (9) und durch Messen der ausgestoßenen Stickstoffoxidemissionen durch den vor Ort befindlichen Gassensor (14) bestimmt wird,
wobei das System ferner eine Rückführungsleitung (20) umfasst, die dafür angeordnet ist, einen Anteil des Ablassgases aus der zweiten Brennkammer (13) zurück in die erste Rückführungskammer (2) zu führen.

8. System zum Verbrennen von Ammoniak nach Anspruch 7, wobei die Rückführungsleitung an einem Mischer (26) zum Mischen des Anteils von rückgeführtem Ablassgas mit angesaugtem sauerstoffhaltigem Gas angeschlossen ist.

9. System nach Anspruch 7 oder Anspruch 8, ferner eine erste Turbine (8) umfassend, die dafür angeschlossen ist, Abgase (102) aus der ersten Brennkammer aufzunehmen, um eine mechanische Ausgabe zu erzeugen und die Abgase für die zweite Brennkammer (13) bereitzustellen.

10. System nach einem der Ansprüche 7 bis 9, ferner eine zweite Turbine (22) umfassend, die dafür angeschlossen ist, Ablassgase aus der zweiten Brennkammer aufzunehmen.

11. System zum Verbrennen von Ammoniak nach Anspruch 10, wobei der Betrieb der zweiten Turbine (22) durch direkte Wirkung von Abgasen aus der zweiten Brennkammer (13) auf die Turbine (22) erfolgt.

12. System nach einem der Ansprüche 7 bis 9, ferner einen Wärmetauscher (15) umfassend, der dafür angeschlossen ist, Ablassgase aus der zweiten Brennkammer aufzunehmen, um dadurch Wasser zu erwärmen und Dampf zum Antreiben einer zweiten Turbine (16) zu erzeugen.

13. System nach Anspruch 12, wobei der Wärmetauscher in die zweite Brennkammer integriert ist.

## Revendications

1. Procédé de combustion d'ammoniac, étant entendu qu'une première chambre de combustion (2) reçoit de l'ammoniac et de l'hydrogène dans des proportions régulées, et un gaz oxygéné, étant entendu que la combustion de l'ammoniac et de l'hydrogène produit des oxydes d'azote entre autres produits de combustion, et étant entendu qu'une deuxième chambre de combustion (13) reçoit les oxydes d'azote en même temps que de l'ammoniac et de l'hydrogène supplémentaires dans des proportions supplémentaires régulées, en même temps que du gaz oxygéné supplémentaire, de telle sorte que la combustion des oxydes d'azote donne de l'azote et de l'eau,
**caractérisé en ce que** le procédé consiste par ailleurs :
- à mesurer la teneur en oxydes d'azote des produits de combustion de la première chambre de combustion avec un détecteur de gaz (9) et le débit des émissions de NOₓ de la deuxième chambre de combustion avec un détecteur de gaz *in situ* (14) ;
- à réguler les proportions d'ammoniac et d'hydrogène et de gaz oxygéné en fonction de la teneur mesurée en oxydes d'azote des produits de combustion de la première chambre de combustion et de la deuxième chambre de combustion au moyen d'un dispositif de régulation (18) en utilisant un régulateur (10, 11) du débit massique de l'ammoniac et de l'hydrogène,
de telle sorte que l'ammoniac et l'hydrogène et le gaz oxygéné soient injectés dans la deuxième chambre de combustion (13) selon un rapport d'équivalence amélioré, ce qui assure un excès d'ammoniac par rapport à ce qui est requis pour réagir avec l'hydrogène fourni pour produire uniquement de l'azote et de l'eau,
étant entendu qu'une certaine proportion des gaz évacués de la deuxième chambre de combustion est recirculée dans la première chambre de combustion dans le but d'assurer la combustion de l'ammoniac restant dans les gaz évacués.

2. Procédé de combustion d'ammoniac selon la revendication 1 étant entendu que l'on récupère l'énergie de la combustion dans la première chambre de combustion (2) en faisant fonctionner une première turbine (8) en vue de convertir en énergie mécanique l'énergie libérée par la combustion dans la première chambre de combustion.

3. Procédé de combustion d'ammoniac selon la revendication 1, étant entendu que l'on récupère l'énergie de la combustion dans la deuxième chambre de combustion (13) en faisant fonctionner une deuxième turbine (16, 22) pour convertir en énergie mécanique l'énergie libérée par la combustion dans la deuxième chambre de combustion.

4. Procédé de combustion d'ammoniac selon la revendication 3 étant entendu que l'on fait fonctionner la deuxième turbine (22) au moyen de l'action directe des gaz d'échappement provenant de la deuxième chambre de combustion (13) sur la turbine (22).

5. Procédé de combustion d'ammoniac selon la revendication 3 étant entendu que l'on fait fonctionner la deuxième turbine (22) en chauffant de l'eau dans un échangeur de chaleur (15) pour entraîner la deuxième turbine (16) au moyen de vapeur.

6. Procédé de combustion d'ammoniac selon la revendication 1 ou la revendication 2 étant entendu que l'on récupère la chaleur de la deuxième chambre de combustion (24) au moyen d'un échangeur de chaleur intégré.

7. Système configuré pour brûler de l'ammoniac, comprenant une première chambre de combustion (2) reliée en vue de recevoir de l'ammoniac (3) et de l'hydrogène (4) dans des proportions régulées, et un gaz oxygéné, et une deuxième chambre de combustion (13) reliée en vue de recevoir les gaz d'échappement (102) de la première chambre de combustion en même temps que de l'ammoniac et de l'hydrogène supplémentaires dans des proportions supplémentaires régulées, en même temps que du gaz oxygéné supplémentaire,
**caractérisé en ce que** le système comprend par ailleurs :
- un détecteur analyseur de gaz (9) pour mesurer la teneur en oxydes d'azote des produits de combustion de la première chambre de combustion ;
- un détecteur de gaz *in situ* (14) pour mesurer le débit d'oxydes d'azote ;
- un dispositif de régulation (18) et des régulateurs (10, 11) du débit massique de l'ammoniac et de l'hydrogène, étant entendu que le dispositif de régulation (18) reçoit des mesures du détecteur analyseur de gaz (9) indiquant la proportion d'oxyde d'azote dans les produits de combustion de la première chambre de combustion, et du détecteur de gaz *in situ* (14), et qu'il régule en conséquence les régulateurs (10, 11) du débit massique de sorte à réguler les proportions d'ammoniac et d'hydrogène et de gaz oxygéné conformément à la teneur en oxyde d'azote mesurée dans les produits de combustion de la première chambre de combustion, de telle sorte que l'ammoniac et l'hydrogène et le gaz oxygéné soient injectés dans la deuxième chambre de combustion (13) selon un rapport d'équivalence amélioré, ce qui assure un excès d'ammoniac par rapport à ce qui est requis pour réagir avec l'hydrogène fourni pour produire uniquement de l'azote et de l'eau, le rapport d'équivalence requis étant déterminé par la mesure de la proportion entrante d'oxydes d'azote par le détecteur de gaz (9) et par la mesure des émissions sortantes d'oxydes d'azote mesurée par le détecteur de gaz *in situ* (14), étant entendu que le système comprend par ailleurs une conduite de recirculation (20) agencée en vue de recirculer dans la première chambre de recirculation (2) une partie du gaz évacué de la deuxième chambre de combustion (13).

8. Système de combustion d'ammoniac selon la revendication 7 étant entendu que la conduite de recirculation est reliée à un mélangeur (26) en vue de mélanger la proportion de gaz évacué recirculé avec l'admission de gaz oxygéné.

9. Système selon la revendication 7 ou la revendication 8, comprenant par ailleurs une première turbine (8) reliée en vue de recevoir des gaz d'échappement (102) de la première chambre de combustion, de produire une sortie mécanique et de fournir les gaz d'échappement à la deuxième chambre de combustion (13) .

10. Système selon l'une quelconque des revendications 7 à 9 comprenant par ailleurs une deuxième turbine (22) reliée en vue de recevoir les gaz évacués de la deuxième chambre de combustion.

11. Système de combustion d'ammoniac selon la revendication 10 étant entendu que l'on fait fonctionner la deuxième turbine (22) au moyen de l'action directe des gaz d'échappement de la deuxième chambre de combustion (13) sur la turbine (22).

12. Système selon l'une quelconque des revendications 7 à 9 comprenant par ailleurs un échangeur de chaleur (15) relié en vue de recevoir les gaz évacués de la deuxième chambre de combustion, au moyen desquels on chauffera de l'eau et on produira de la vapeur pour entraîner une deuxième turbine (16).

13. Système selon la revendication 12 étant entendu que l'échangeur de chaleur est intégré à la deuxième chambre de combustion.
